# EUROPÄISCHE PATENTANMELDUNG

(11) **EP 4 492 167 A1**
(43) Veröffentlichungstag der Anmeldung: **15.01.2025**
(21) Anmeldenummer: 24186683.9
(22) Anmeldetag: 04.07.2024
(51) Int. Cl.: G05B 19/048, G05B 19/418

(54) **VERFAHREN UND VORRICHTUNG ZUR PROZESSSTEUERUNG VON ARBEITSAUFGABEN MITTELS EINES WERKZEUGS AN EINEM OBJEKT**

(30) Priorität: 11.07.2023 DE 102023118299
(71) Anmelder: soft2tec GmbH, 65428 Rüsselsheim (DE)
(72) Erfinder: Honisch, Frank, 6841 BL Arnhem (NL); Brüning, Wolfgang, 61130 Nidderau (DE); Gilson, Laurent, 9188 Vichten (LU)
(74) Vertreter: Keil & Schaafhausen Patentanwälte PartGmbB

(57) **Zusammenfassung**

Es werden ein Verfahren und eine Vorrichtung zur Prozesssteuerung von Arbeitsaufgaben mittels mindestens eines Werkzeugs (4) an mindestens einem Objekt (2) beschrieben, wobei die Arbeitsaufgaben in an dem Objekt (2) definierten 3D-Arbeitszonen (10) auszuführen sind. Mittels eines Positionserkennungssystems (5) werden die Position und Ausrichtung des Werkzeugs (4) in einem übergeordneten Koordinatensystem des Positionserkennungssystems (5) und die Position und Ausrichtung des Objekts (3) optisch über die Zeit bestimmt. Aus der bestimmten Position und Ausrichtung des Objekts (2) werden jeweils die definierten 3D-Arbeitszonen (10) an dem Objekt (2) ermittelt. Durch Vergleich über die Zeit wird festgestellt, wann sich das Werkzeug (4) in einer der 3D-Arbeitszonen (10) an dem Objekt (2) befindet, und dann wird das Ausführen der Arbeitsaufgabe für das Objekt (2) in der 3D-Arbeitszone (10) freigegeben, parametriert und/oder erfasst wird. Als Sensor (9) wird insbesondere ein LIDAR-Sensor oder ein TOF-Sensor vorgesehen, (Fig. 1)

## Beschreibung

Die Erfindung betrifft ein Verfahren und eine Vorrichtung zur Prozesssteuerung von Arbeitsaufgaben mittels mindestens eines Werkzeugs an mindestens einem Objekt. Das Objekt kann vorzugsweise ein Werkstück sein, wie bspw. ein Kraftfahrzeug oder anderes Produkte, das insbesondere in einer Prozessline in mehreren Arbeitsschritten gefertigt werden, in denen die Arbeitsaufgaben abgearbeitet werden. Die Begriffe Werkstück und Objekt werden in diesem Text synonym verwendet. Die Arbeitsaufgaben sind in an dem Objekt definierten 3D-Arbeitszonen auszuführen.

Erfindungsgemäß werden mittels eines Positionserkennungssystems die Position und Ausrichtung des Werkzeugs in einem übergeordneten Koordinatensystem des Positionserkennungssystems optisch über die Zeit bestimmt, d.h. es werden die Lage (Position und Ausrichtung des Werkzeugs) in sechs Raumfreiheitsgraden erkannt. Dazu wird mindestens ein an dem Werkzeug angebrachter Marker des Positionserkennungssystems mittels einer Kamera durch ein Bild erfasst.

Vorrichtungen und Verfahren zur Lage- und Positionserkennung von Markierungen im dreidimensionalen Raum umfassen eine Markieranordnung (Marker) mit Markiereinheiten, die bspw. mit entlang einer Linie angeordnete Leuchtmittel (wie Infrarot-Dioden) umfasst, mit mindestens einer optischen Bilderfassungseinheit (Kamera), die zur Aufnahme von Bildern der Markieranordnung eingerichtet ist, und einer Auswerteeinheit (als Teil des Positionserkennungssystems), die zur eindeutigen Bestimmung der Ausrichtung (Lage) und der Position der Markieranordnung aus genau einem Bild der optischen Bilderfassungseinheit eingerichtet ist. Ein Beispiel hierfür ist in der WO 2022/012899 A2 beschrieben. In diesem Beispiel weist jede der Markiereinheiten mindestens drei Leuchtmittel auf, die als Markierungen und/oder Kommunikationselemente ausgebildet sind. Mindestens eine der Markiereinheiten gehört zu einer ersten Markiereinheitenart mit mindestens drei Markierungen, und mindestens eine andere der Markiereinheiten gehört zu einer zweiten Markiereinheitenart mit genau zwei Markierungen und mindestens einem Kommunikationselement, das zwischen den beiden Markierungen (21) angeordnet ist. Mindestens eine der Markiereinheiten der ersten Markiereinheitenart und mindestens eine der Markiereinheiten der zweiten Markiereinheitenart sind nicht koplanar angeordnet. Eine solche Anordnung besonders geeignet zur eindeutigen Bestimmung der Ausrichtung und der Position der Marker, wobei Markierungen der ersten Markiereinheitenart und der zweiten Markiereinheitenart erkannt und in Relation zueinander gesetzt werden. Dieses Verfahren kann auch erfindungsgemäß zur Erkennung der Position und Ausrichtung der Marker verwendet werden.

Ein ähnliches System ist auch aus der WO 2021/259523 A1 bekannt. Auch dieses System ist zur erfindungsgemäß zur Erkennung der Position und Ausrichtung der Marker besonders geeignet. Es umfasst mindestens eine Markiereinheit (Marker) mit mehreren Markierungen, eine optische Bilderfassungseinheit, die zur Aufnahme von Bildern der Markiereinheit eingerichtet ist, und eine Auswerteeinheit, die zur eindeutigen Bestimmung der Ausrichtung (Lage) und der Position der Markiereinheit eingerichtet ist. Die Markiereinheit weist mindestens fünf Markierungen zur Lage- und Positionsbestimmung und mindestens ein Kommunikationselement zur Kodierung der Markiereinheit auf. Die Auswerteeinheit bestimmt in dem aufgenommenen Bild aus den Markierungen die Ausrichtung und Position der Markiereinheit und aus dem mindestens einen Kommunikationselement eine Identität der Markiereinheit.

Dem Fachmann sind diese oder andere Möglichkeiten zur Bestimmung von Position und Ausrichtung von Markern bekannt. Alle diese bekannten Möglichkeiten können in der Erfindung grundsätzlich angewendet werden.

Erfindungsgemäß ist das Positionserkennungssystems auf dafür vorgesehen, die Position und Ausrichtung des Objekts (d.h. dessen Lage in sechs Raumfreiheitsgraden) optisch über die Zeit zu bestimmen. Dies kann in dem übergeordneten Koordinatensystem des Positionserkennungssystem erfolgen, oder einem eigenen Koordinatensystem des dafür verwendeten Sensors des in dem übergeordneten Koordinatensystem des Positionserkennungssystems.

Mit einer Bestimmung der Position und Ausrichtung von Werkzeug und Objekt über die Zeit ist gemeint, dass das Positionserkennungssystem Bewegungen von Werkzeug und Objekt registriert und zu jedem Zeitpunkt sowohl die Position und Ausrichtung des Objekts als auch die Position und Ausrichtung des Werkzeugs kennt.

Aus der bestimmten (im Sinne von ermittelten) Position und Ausrichtung des Objekts werden jeweils (d.h. bei jeder Bestimmung von Position und Ausrichtung des Objekts über die Zeit) die definierten 3D-Arbeitszonen an dem Objekt in dem übergeordneten Koordinatensystem ermittelt. Dies kann in dem Positionserkennungssystem oder einem nachgeordneten Prozesssteuerungssystem erfolgen, wobei die beiden Systeme auch als eine physikalische Einheit zusammengefasst sein können. Durch Vergleich wird über die Zeit festgestellt, wann sich das Werkzeug in einer der 3D-Arbeitszonen an dem Objekt befindet, wobei in diesem Fall eine Arbeitsposition des Werkzeugs signalisiert wird. Dies erfolgt insbesondere für genau dieses Werkzeug, das die Arbeitsaufgabe in der 3D-Arbeitsposition ausführen soll, insbesondere falls mehrere durch die Prozesssteuerung gesteuerte Arbeitsaufgaben durch verschiedene Werkzeuge auszuführen sind.

Wenn eine Arbeitsposition des Werkzeugs signalisiert ist oder wird, wird mittels eines Prozesssteuerungssystems das Ausführen der Arbeitsaufgabe für das Objekt in der 3D-Arbeitszone freigegeben, parametriert und/oder erfasst. Dieser Vorgang wird auch als Prozesssteuerung bezeichnet.

Hierfür ist entscheidend, dass das System erkennt, wo sich das Objekt (Werkstück) gerade befindet und wo sich die Werkzeuge relativ dazu befinden.

Hierzu ist aus dem Stand der Technik DE 20 2018 105 197 U1 ein System zur markerlosen Erkennung von sechs Freiheitsgraden eines Werkstücks bekannt, bei dem das Werkstück entlang eines definiert fest vorgegebenen Bewegungspfads bewegt wird. Ein Distanzlaser ist in dem System derart positioniert und gerichtet, dass er entlang des festen Bewegungspfads in jeder Position des Werkstücks einen Werkstückpunkt beleuchtet und mittels einer Sensorreinrichtung die Entfernung zwischen dem Werkstück und dem Distanzlaser misst. Nach einer einmaligen Erfassung der Position und Ausrichtung (Lage) des Werkstücks im Raum durch ein Markersystem, wie dies beispielhaft zuvor beschrieben wurde, und einer Korrelation der erfassten Position und Ausrichtung des Werkstücks mit der jeweiligen durch den Distanzlaser ermittelten Entfernung auf der fest vorgegeben Bewegungsbahn, kann die Position und Ausrichtung des Werkstücks alleine durch Messen der Distanz mit dem Distanzlaser anhand der gemessenen Distanz angegeben werden. Dieses Verfahren funktioniert gut, wenn das Werkstück entlang einer insbesondere geraden, zumindest aber genau definierten Bewegungsbahn verfahren wird und die Ausrichtung des Werkstücks zu einem Träger des Werkstücks zum Verfahren reproduzierbar genau definiert ist.

Es ist jedoch nicht möglich, verschiedene Werkstücke automatisiert zu erkennen. Auch war es schwierig automatisiert zu erkennen, wenn ein neues Werkstück in die durch den Distanzlaser erfasste Bewegungsbahn eingefahren ist. Oftmals müssen auch Reflektoren an den bewegten Werkstücken angebracht werden, wenn der Laserpunkt auf dem Objekt im Verlauf der Bewegungsbahn den Erfassungsbereich verlässt, bspw. durch Abschirmung, wenn ein folgendes Werkstück in den Projektionsraum des Lasers einfährt. Der Distanzlaser ist grundsätzlich auf ein Objekt im Erfassungsbereich beschränkt. Auch können Fehler auftreten, wenn der Laserstrahl durch Gegenstände im Erfassungsbereich unterbrochen wird.

Vor diesem Hintergrund ist es die Aufgabe der Erfindung, eine robustere und flexibler einsetzbare Möglichkeit zur Prozesssteuerung von Arbeitsaufgaben mittels mindestens eines Werkzeugs an mindestens einem Objekt (Werkstück) vorzuschlagen.

Diese Aufgabe wird durch ein Verfahren mit den Merkmalen des Anspruchs 1 und eine Vorrichtung mit den Merkmalen das Anspruchs 10 gelöst. Es ist vorgehen, dass in dem Positionserkennungssystem zur Bestimmung von Position und Ausrichtung des Objekts mindestens ein Sensor vorgesehen ist, mit dem eine Szene mit dem mindestens einen Objekt und dem mindestens einen Werkzeug über die Zeit optisch erfasst und jedem Bildpunkt eine Entfernungsinformation als 3D-Punktewolke zugeordnet wird, wobei aus den Bildpunkten und der Entfernungsinformation das Objekt erkannt und die Position und Ausrichtung des Objekts bestimmt werden.

Der Sensor kann vorzugsweise ein LIDAR-Sensor oder ein TOF-Sensor sein. LIDAR steht für "Light Detection And Ranging" und ist eine dem Radar verwandte Methode zur Abstandsmessung. Die LIDAR-Sensoren senden in der Regel Laserimpulse aus und detektieren das zurückstreute Licht. TOF steht für Time Of Flight und steht für 3D-Kamerasysteme, die mit dem Laufzeitverfahren Distanzen messen. Dazu wird die betrachtete Szene mittels eines Lichtimpulses ausgeleuchtet, und die Kamera misst für jeden Bildpunkt die Laufzeit des Lichtes zum Objekt und zurück. Im Gegensatz zu einem Laserscanner, wie bei LIDAR-Sensoren häufig verwendet, haben TOF-Sensoren den Vorteil, dass die ganzen Szene auf einmal aufgenommen wird. Die Beleuchtung können LEDs oder Laserdioden sein, im sichtbaren oder Infrarot-Wellenlängenbereich. Damit ist das System auch einfacher in Produktionslinien zu integrieren als die aus dem Stand der Technik bekannten Systeme, weil lediglich die Sensoren installiert werden müssen, um eine vollständige 3D-Punktewolke der Szene mit den Objekten zu erzeugen, in denen die Objekte eindeutig identifiziert werden können und ihre Position bestimmt werden kann. Das aufwendige Installieren von Distanzlesern und das Anbringen von Reflektoren und/oder ein positionsgenaues Anbringen von Markern kann entfallen.

Ein Identifizieren der Objekte ist daher möglich, ohne dass von außen eine Vorgabe erfolgen muss, welches Objekt getrackt werden soll. Das Identifizieren kann bereits mittels weniger, während der anfänglichen Bewegung des Werkstücks aufgenommener charakteristischer Punkte erfolgen, ohne die genaue Position und Ausrichtung zu ermitteln und ohne dass das gesamte Objekt sichtbar sein muss. Die Identifikation des Objekts in dem Positionserkennungs- und Prozesssteuerungssystem kann genutzt werden, um eine Zonenkontrolle zu aktivieren, die für die identifizierte Werkstückvariante zuständig ist. Andernfalls kann eine Weiterverarbeitung der Daten durch das Prozesssteuerungssystem abgebrochen werden, wenn das erkannte Objekt in diesem Bearbeitungsbereich bzw. Bearbeitungsteilbereich nicht bearbeitet werden muss.

Durch die erfindungsgemäß vorgeschlagenen Sensoren ist es möglich, in der 3D-Punktewolke Bewegungskanäle oder Bereiche in dem Bearbeitungsbereich (und entsprechend dem Sensorfeld) zu definieren, in denen die Daten gefiltert werden, die benötigt werden, um mindestens einen eindeutigen Messwert zu berechnen, der das Objekt identifiziert und die tatsächliche Position und Ausrichtung des Objekts (Positioniersignal) beschreibt. Durch das Erfassen der 3D-Punktwolke durch den erfindungsgemäßen Sensor kann aufgrund vieler paralleler Messpunkte ein robusteres Positioniersignals generiert werden als in einem Fall, in dem nur ein Messpunkt, wie bspw. bei dem Distanzlaser gemäß dem Stand der Technik, zur Verfügung steht. Außerdem lassen sich alle Bildpunkte (mit den zugeordneten Entfernungsinformationen) der 3D-Punktwolke parallel auswerten, so dass auch mehrere Objekte in dem Bearbeitungsbereich gleichzeitig erkannt und von Prozesssteuerung berücksichtigt werden können.

Gemäß einer bevorzugten Ausführungsform können in der 3D-Punktewolke mehrere (ebene oder gekrümmte) Flächen erkannt und zueinander in Relation gesetzt werden, um das Objekt zu erkennen und die Position und Ausrichtung des Objekts über die Zeit zu bestimmen. Mit anderen Worten wird das Objekt durch die in dem Bild durch Bildauswertung erkannten und einer definierten Relation zueinanderstehenden Flächen in dem Bild identifiziert. Durch die Identifikation des Objekts in jedem Bild kann über die Zeit (d.h. in zu verschiedenen Zeiten aufgenommenen Bildern) so auch die Bewegungsbahn des Objekts beschrieben werden. Das Erkennen der Flächen kann auf die Bewegungskanäle (Bereiche in dem Bearbeitungsbereich) beschränkt werden, die den tatsächlichen Bearbeitungsbereich des Objekts beschreiben.

Unterschiedliche Objekte können erfindungsgemäß automatisch dadurch erkannt und identifiziert werden, dass zur Beschreibung unterschiedliche charakteristische Flächen in Relation gesetzt werden.

In einer Weiterentwicklung dieser Ausführungsform können Ränder der Flächen des Objekts durch Kanten erkannt werden, an denen sich die Orientierung der Fläche ändert, und/oder durch Helligkeitsänderungen in dem Bild. Kanten sind in diesem Sinne Änderungen der Fläche, an denen sich ein abrupter (nicht-stetiger) Übergang von einer ersten zu einer zweiten Orientierung der Fläche ergibt. In optischen Kamerabildern zeigen sich derartige Kanten meist durch Linien und/oder abrupte Kontraständerungen, die optisch in einem zweidimensionalen Bild durch übliche Bilderkennungsverfahren erkennbar sind. Aufgrund der zusätzlichen Entfernungsinformationen in der 3D-Punktewolke können Kanten auch durch eine starke Änderung der Entfernung zwischen Bildpunkten in einem Nachbarschaftsbereich der Bildpunkte (oder mit anderen Worten einer Änderung eines Entfernungsgradienten zwischen Bildpunkten im Nachbarschaftsbereich) erkannt werden.

Helligkeitsänderungen in dem Bild zwischen Bildpunkten in einem Nachbarschaftsbereich können bei unterschiedlichen Orientierungen der Flächen auftreten, weil sich Reflexionsrichtungen des Lichts ändern. Signifikante Helligkeitsänderungen treten aber möglicherweise auch auf, wenn sich die Flächen durch ihre Beschaffenheit (Art des Materials der Oberfläche, verschiedene Oberflächeneigenschaften) unterscheiden, auch ohne dass eine Änderung in der Orientierung der Flächen gibt. Dies liegt an unterschiedlichen Reflexionseigenschaften unterschiedlicher Materialien.

Ein wichtiger Vorteil der Verwendung der erfindungsgemäßen Sensoren, insbesondere von LIDAR- und/oder TOF-Sensoren, liegt darin, dass optische Informationen (Helligkeit des Bildpunkts) indikativ für die Beschaffenheit der Oberfläche mit Entfernungsinformationen (indikativ für Abstand des Objekts vom Sensor im Bildpunkt) gekoppelt sind. So lässt sich aus den Bildpunktdaten, in denen das Objekt erkannt ist, unmittelbar eine Aussage über die Lage und Ausrichtung des Objekts erfassen, ohne dass aufwendige Berechnungen, wie bspw. Triangulationsverfahren, durchgeführt werden müssen, die Konstruktionsdaten des Objekts bekannt sein müssen und/oder Stereokamerasysteme eingesetzt und aufwendig kalibriert werden müssen.

Außerdem senden die erfindungsgemäß verwendeten Sensoren, insbesondere LIDAR- und/oder TOF-Sensoren, das zur Detektion nach einer Reflexion verwendete Licht selbst aus. Damit ist das Detektionsverfahren dieser Sensoren auch unabhängig von dem Umgebungslicht, im Gegensatz zu einer rein optischen Bildaufnahme unter Verwendung des Umgebungslichts. Vorzugsweise ist das Spektrum des Lichts bekannt, so dass eine wellenlängenselektive Filterung bei der Detektion möglich ist, um Rauschen ein Rauschen durch Umgebungslicht zu minimieren. Wenn das verwendete Licht gemäß einer Ausführungsform einen roten, gelben und blauen Anteil hat, können auch Farbinformationen der Oberflächen bei der Bestimmung der Flächen des Objekts mit verwendet werden. Wenn das verwendete Licht einen filterbaren infrarotanteil hat, können Entfernungsinformationen unabhängig von Lichtanteilen im sichtbaren Wellenlängenbereich ermittelt werden, wodurch ein Untergrundrauschen weiter reduziert werden kann. Auch eine Kombination der vorgenannten Optionen ist möglich.

Insgesamt kann das Objekt mit den erfindungsgemäßen Sensoren also durch viele verschiedene Merkmale charakterisiert und damit mit sehr großer Genauigkeit erkannt werden. Dessen Position und Ausrichtung können entsprechend sehr genau beschrieben werden. Dies ermöglicht auch eine Erkennung und Lagebestimmung (Position und Ausrichtung) des Objekts, wenn Teile des Objekts in einer Szene (bspw. durch einen Werker, der das Werkzeug führt und betätigt, um Arbeitsaufgabe auszuführen) verdeckt und in dem Bild nicht dargestellt sind. Dies macht das erfindungsgemäße Verfahren im Vergleich zu aus dem Stand der Technik bekannten Lösungen sehr robust.

Mathematisch können die erkannten Flächen des Objekts in einer einfachen Ausführungsform durch plane Ebenen mit geraden Kanten beschrieben werden, wobei die Orientierung der Ebenen bspw. durch einen senkrecht auf der Ebene stehenden Normalenvektor beschrieben wird. So lassen sich mathematisch einfach Relationen zwischen den erkannten Flächen des Objekts bilden. In einer aufwendigeren Lösung können die Flächen auch durch Anpassen (Fitten) geometrischer Formen beschrieben werden, wobei die Lage und Ausrichtung der geometrischen Figuren mit den zur Beschreibung der Figuren gefitteten Parametern zur Bildung der Relationen zwischen den Flächen verwendet werden können. Dies ermöglicht auch die Beschreibung nicht planer Flächen und/oder nicht gerader Kanten. Die Erfindung ist diesbezüglich nicht auf die zuvor beschriebenen Ausführungsformen beschränkt, auch wenn diese einfach realisierbare und robuste Möglichkeiten zur Erkennung und Beschreibung der Objekte bilden.

In einer weiteren bevorzugten Ausführung kann die Position und Ausrichtung des Objekts durch einen Vektor beschrieben werden, der immer an derselben Position des Objekts angreift. Diese Position kann durch die Bilderkennung (Software) in dem Positionserkennungssystem oder dem Prozesssteuerungssystem selbsttätig festgelegt werden.

Erfindungsgemäß kann aus der Änderung von Position und/oder Ausrichtung des Objekts über die Zeit eine Bewegung des Objekts relativ zu dem Positionserfassungssystem bestimmt werden (bspw. durch Ermitteln einer Bewegungsrichtung und/oder Bewegungsgeschwindigkeit). So kann in einer Prozesssteuerung auch geprüft werden, ob bestimmte Arbeitsaufgaben in einem vorgesehenen Prozessabschnitt bzw. Bearbeitungs(teil)bereich durchgeführt werden und ob die - bei gleichförmiger Weiterbewegung des Objekts - alle zu erledigenden Arbeitsaufgaben in dem Prozessabschnitt noch erreichbar sind. Dies kann zu einer flexiblen Steuerung der Bewegung des Objekts in der Prozesslinie genutzt werden, die gerade so gesteuert oder geregelt werden kann, dass die vorgesehenen Arbeitsaufgaben gerade in dem Prozessabschnitt bzw. Bearbeitungs(teil)bereich (unter Ausnutzung der Länge des vorgesehenen Prozessabschnitts bzw. Bearbeitungs(teil)bereichs) durchgeführt werden. Dies optimiert dynamisch die Nutzung der zur Verfügung stehen Ressourcen und ist sehr robust, weil in dem Prozess auftauchende Probleme dynamisch berücksichtigt werden können. Bei Signalverlust können bekannte Bewegungsinformationen des Objekts auch zur Vorhersage wahrscheinlicher zukünftiger Positionen verwendet werden.

Erfindungsgemäß lässt sich eine besonders einfache Inbetriebnahme und Parametrierung erreichen, wenn die Bestimmung der an dem Objekt definierten 3D-Arbeitszonen durch Einmessen des Objekts mit einem Verfahren erfolgt, bei dem das Objekt mittels des mindestens Sensors des Positionserkennungssystem 3D-Punktewolken erfasst, mehrere (ebene oder gekrümmte) Flächen erkannt und als Flächen des Objekts identifiziert werden (bspw. durch manuelle Auswahl oder durch Vorgabe eines Bildbereichs, der das mindestens eine Objekt zeigt). Die als Flächen des Objekts identifizierten Flächen in Relation werden zueinander gesetzt, beschreiben das Objekt eindeutig zu beschreiben. Während des Einmessens wird an dem Objekt zusätzlich ein oder mehrere Marker des Positionserkennungssystems angebracht. Die Position und Ausrichtung des Markers an dem Objekt sind damit auch durch die Kamera des Positionserfassungssystems erfassbar, genauso wie die Marker an den Werkzeugen. Um die 3D-Arbeitszonen an dem Objekt zu kennzeichnen, wird das Werkzeug mit dem an dem Werkzeug angebrachten Marker und/oder ein Positionstracker mit einem an dem Positionstracker angebrachten Marker an einen (bzw. nacheinander an jeden) Arbeitspunkt für eine Arbeitsaufgabe an dem Objekt geführt.

Zeitsynchron werden dann die 3D-Punktewolke durch den mindestens einen Sensor und ein Bild der Marker des Objekts und des Werkzeugs und/oder Positionstrackers erfasst, wobei (a) die Position und Ausrichtung des Objekts aus der 3D-Punktewolke und (b) die Position und Ausrichtung des Markers des Werkzeugs () und/oder Positionstrackers aus dem Bild der Kamera über (c) die Position und Ausrichtung des Markers des Objekts miteinander korreliert werden. Hierdurch werden die 3D-Arbeitszonen um die Arbeitszonen des Objekts definiert (wobei ein Toleranzbereich für die 3D-Arbeitszonen vorgegeben werden kann).

Diese Korrelation ermöglicht das Vorgeben der 3D-Arbeitszonen bezogen auf die Lage und Ausrichtung des Objekts in dem übergeordneten Koordinatensystem, ohne dass eine Bestimmung der Position und Ausrichtung des Objekts im Raum explizit (als Angabe konkreter Koordinaten) in dem übergeordneten Koordinatensystem erfolgen muss. Durch die Korrelation über den Marker an dem Objekt beim Einmessen wird die Lage und Ausrichtung des Objekts, erfasst in der 3D-Punktwolke und bspw. beschrieben durch einen Vektor an dem Objekt, in das übergeordnete Koordinatensystem übertragen in dem Sinne, dass die Position und Ausrichtung von Markern, wie sie an dem Positionstracker und/oder den Werkzeugen angebracht sind, relativ zu der Lage und Ausrichtung des Objekts bekannt sind. Damit lassen sich die 3D-Arbeitspositionen in dem übergeordneten Koordinatensystem der Tracker beschreiben. Somit findet also durch diese Korrelation auch eine optische Bestimmung der Position und Ausrichtung des Objekts in dem übergeordneten Koordinatensystem des Positionserkennungssystem statt, allerdings ohne dass explizit Koordinaten der Lage und Ausrichtung des Objekts in dem Koordinatensystem beschrieben werden. Dies stellt eine bevorzugte Ausführungsform der Erfindung dar, weil das Parametrieren und Einlernen von Objekten besonders einfach sind. Eine explizite Kalibrierung des Koordinatensystems des Sensors auf das übergeordnete Koordinatensystem, in dem die Marker beschrieben werden, muss bei dieser Lösung nicht erfolgen.

Die Erfindung ist allerdings nicht auf diese besonders bevorzugte Lösung beschränkt. Es ist erfindungsgemäß auch möglich, das Koordinatensystem des Sensors und das übergeordnete Koordinatensystem der Marker explizit aufeinander zu kalibrieren und die Position und Ausrichtung des Objekts explizit (unter Angabe der Koordinaten) in diesem übergeordneten Koordinatensystem zu beschreiben. Das Durchführen einer solchen Kalibrierung ist dem Fachmann bekannt. Dies ist bei der Einrichtung des Systems allerdings mit einem erheblichen Aufwand verbunden, und in der Regel muss im Betrieb, d.h. während der Durchführung der des Verfahrens zur Prozesssteuerung, regelmäßig eine Nachkalibrierung stattfinden.

Ein weiterer Vorteil des in dieser Ausführungsform beschrieben vorteilhaften Einlernverfahrens liegt darin, dass die Konstruktionsdaten des Objekts nicht bekannt sind bzw. sein müssen. Die 3D-Arbeitszonen werden einfach durch Kennzeichnung der Arbeitspunkte mit dem Werkzeug und/oder dem Positionstracker (und den daran festgelegten Markern) eingelernt, was auch als Einteachen bezeichnet wird.

Damit sind auch die 3D-Arbeitszonen relativ zu der Position und Ausrichtung des Objekts bekannt, sobald Position und Ausrichtung des Objekts in dem übergeordneten Koordinatensystem (bevorzugt durch die vorstehend beschriebenen Korrelation) bestimmt ist und die eigentliche Prozesssteuerung der Arbeitsaufgaben kann durchgeführt werden.

Durch die erfindungsgemäß vorgeschlagene Bestimmung von Position und Ausrichtung des Objekts, die durch einfaches Aufnehmen des Objekts durch die Sensoren und Einteachen der 3D-Arbeitszonen parametriert wird, ohne dass weitere Informationen zu dem Objekt (3D-Konstruktionsdaten) oder eine Bewegungsbahn des Objekts während der Durchführung der Arbeitsaufgaben relativ zu dem übergeordneten Koordinatensystem respektive dem Positionserfassungssystem bekannt sein müssen, ist das System in Praxis schnell konfiguriert und flexibel einsetzbar, bspw. wenn die Position des Objekts in der Produktion nicht immer gleich ist und verschiedene Objekte in der Prozesslinie bearbeitet werden. Nach dem Einlernen eines bzw. jedes verschiedenen Objekts, das in der Produktionsline bearbeitet wird, kann das Objekt in der Produktionslinie einfach erkannt und dessen Position und Lage einfach und zuverlässig bestimmt und bei der Prozesssteuerung verwendet werden.

In einer besonders bevorzugten Ausführungsform des vorgeschlagenen Verfahrens wird das Objekt bei dem Einmessen von einem Startpunkt bis zu einem Endpunkt eines Bearbeitungsbereichs des Objekts bewegt und über den Bearbeitungsbereich mit dem Sensor erfasst, wobei jeweils die Position und Ausrichtung bestimmt wird. Vorzugsweise wird die Position und Ausrichtung des Objekts mit der zugehörigen Relation der erkannten Flächen gespeichert, so dass Vergleichsdaten des Objekts für verschiedene Positionen des Objekts in dem Bearbeitungsbereich vorhanden sind. Es liegen somit Daten des mindestens einen Sensors als 3D-Punktewolke für jeden Arbeitsort im Bearbeitungsbereich des Objekts vor. Dies erleichtert das Auffinden der Objekte bei der Durchführung der Arbeitsschritte während der Prozesssteuerung sowie das Erkennen der Ausrichtung des Objekts.

Das Einmessen der Bewegungsbahn des Objekts ermöglicht es erfindungsgemäß auch im Betrieb, d.h. bei der Ausführung des Verfahrens nach dem Einmessen, Abweichungen von der Position und Lage des Objekts zu erkennen. Dies kann erfindungsgemäß verwendet werden, um bei der Prozesssteuerung zu überprüfen, ob ein vorgegebener Bewegungsablauf des Objekts eingehalten wird, bspw. durch Vorgabe von Toleranzen zu der Position und Ausrichtung beim Einmessen. Da die 3D-Arbeitszonen an dem Objekt für das Ausführen von Arbeitsaufgeben durch das Werkzeug beim Einlesen erfindungsgemäß mit der Position und Ausrichtung des Objekts korreliert wurden (d.h. mit anderen Worten einem Objektkoordinatensystem festlegt sind), wird die aktuelle Lage und Position automatisch an die Daten in der 3D-Punktewolke angepasst. Die 3D-Arbeitszonen an dem Objekt sind also in dem übergeordneten Koordinatensystem relativ zu dem Objekt bekannt und werden von der Prozesssteuerung in Bezug auf die Position und Ausrichtung der Werkzeuge automatisch berücksichtigt.

In dieser Ausführungsform können bei dem Einmessen des Objekts über die Bewegungsbahn von dem Startpunkt zu dem Endpunkt entsprechend die Start- und Endpunkte des Objekts in dem Bearbeitungsbereich festgelegt werden. Diese Start- und Endpunkte für die Objekte können erfindungsgemäß bei der Durchführung des Verfahrens (nach dem Einmessen) besonders überwacht werden (spezielle Bewegungskanäle) in dem Sinne, dass in jedem Bild jeder Startpunkt und jeder Endpunkt eines Objekts daraufhin untersucht wird, ob an dieser Position ein mit der Position als Start- oder Endpunkt korreliertes Objekt identifizierbar ist. In einem Startpunkt wird die Prozesssteuerung für das Objekt aktiviert und einem Endpunkt wird die Prozesssteuerung für das Objekt wieder deaktiviert.

Gemäß einer besonders bevorzugten Ausführungsform ist vorgesehen, dass die Szene mit dem mindestens einen Objekt und dem mindestens einen Werkzeug von mehreren Sensoren (und ggf. auch Kameras) aus verschiedenen Richtung aufgenommen wird. Die Daten der verschiedenen Sensoren können zusammengeführt werden, weil dann teilweise redundante Daten in der 3D-Punktwolke vorliegen und korreliert werden können. Dies erlaubt eine noch robustere Erkennung der Lage des Objekts, auch wenn Teilbereiche des Objekts im Sensorfeld eines oder mehrerer Sensoren abgedeckt sind. Werker (Arbeiter, die zur Ausführung der Arbeitsaufgaben Werkzeuge führen und bedienen) decken oftmals Bereiche des Objekts ab, wenn sie mit ihrem Körper zwischen Sensor und Objekt kommen. Das Vorliegen redundanter Daten erlaubt es, auch Flächen an dem Objekt zu erkennen und zueinander in Relation zu setzen, ohne dass die gesamte erkannte Fläche durch einen Senor erfasst wird.

Mit anderen Worten können 3D-Punktwolken mehrerer Sensoren fusioniert werden, um den Bewegungsraum zu erweitern und bspw. den gesamten Bearbeitungsbereich aus mindestens einer Blickrichtung, vorzugsweise aus mehreren Blickrichtungen, zu erfassen. Die 3D-Punktewolken können zueinander registriert werden und bilden den gewünschten Bewegungsraum ab. Dies ermöglicht außerdem bei einer teilweisen Sichtbarkeit eines Objekts in mehreren Sensoren das Objekt genauer zu lokalisieren, als dies über nur einen Sensor möglich wäre.

Grundsätzlich kann jeder Senor (insbesondere beim Einlernen) mit der erfassten 3D-Punktewolke zumindest zunächst ein eigenes Koordinatensystem bilden, so dass mehrere verschiedene Koordinatensysteme existieren. Diese können durch das Positionserkennungssystem oder das Prozesssteuerungssystem in genau einem übergeordneten Koordinatensystem des Positionserkennungs- und Prozesssteuerungssystems zusammengeführt werden, vorzugsweise durch die vorbeschriebene Korrelation.

Es ist aber auch möglich, dass das Prozesssteuerungssystem grundsätzlich mit zusätzlichen Koordinatensystemen der verschiedenen Sensoren arbeitet und im Zuge der Prozesssteuerung eines der Koordinatensysteme (respektive der Sensoren) für das Ausführen einer Arbeitsaufgabe auswählt.

Entsprechend können zur Positionserkennung der Werkzeuge mehrere Kameras vorgesehen sein, die die Szene aufnehmen. Die Aufnahmen der Kameras und der Sensoren erfolgen gemäß der Erfindung vorzugsweise aufeinander synchronisiert, so dass die Position der Objekte und die Position der Werkzeuge zur gleichen Zeit jeweils zur gleichen Zeit bekannt ist.

Während des Durchführung des erfindungsgemäßen Verfahrens zur Prozesssteuerung können sich gleichzeitig mehrere Objekte und/oder Werkzeuge im Arbeitsbereich befinden und mehrere Arbeitsaufgaben unabhängig voneinander parallel ausgeführt werden. Insbesondere können auch verschiedenartige Objekte (sofern jedes der Objekte wie beschrieben einmal eingelernt bzw. eingeteacht wurde) gleichzeitig parallel erfasst und von der Prozesssteuerung behandelt werden. Die Objekte und Werkzeuge, die gleichzeitig in einer Szene erfasst und von der Prozesssteuerung behandelt werden, können jeweils eigene Bewegungen in unterschiedlicher Richtung und/oder Geschwindigkeit ausführen. Die Distanz auch zwischen den verschiedenen Objekten im erfassten Bewegungsraum kann sich somit ändern und zu verschiedenen Messzeitpunkten verschieden sein.

Dies ist ein großer Vorteil der Überwachung der Szene mit Kameras, die aus den Bildern speziell ausgestalteter Marker (wie beschrieben) Lage und Position der Marker (in bekannter Weise) ermitteln können, und mit Sensoren, die eine 3D-Punktwolke von Bildpunkten und Entfernungsangaben des gesamten Sensorfeldes erzeugen. Damit können die Daten schnell und effizient auswertet werden, auch von mehreren Objekten und Werkzeugen gleichzeitig.

Bewegte Objekte können Objekte sein, die relativ zu einer feststehenden Arbeitsumgebung bewegt werden. Es ist auch möglich, dass die Arbeitsumgebung (Werkzeuge und Werker) an einem feststehenden oder mit einer anderen Bewegung bewegten Objekt vorbeifahren. Dies ist zum Beispiel der Fall, wenn ein Railsystem zum Einsatz kommt, an dem ein Werkzeug (bspw. ein Schrauber mit einem Torque Arm) bewegt wird. Dies wird oftmals genutzt, wenn in einer Fließfertigung ein Werkzeug parallel an verschiedenen Fahrzeugen zum Einsatz kommt. Dann bewegt sich das Band mit dem Werkzeug, und der Werker kann Nacharbeiten in einen (bspw. mehrere Meter langen) Bearbeitungsbereich entlang der Linie durchführen.

Das Positionserfassungssystem mit den Kameras und Sensoren kann in einem feststehenden System oder in einem bewegten System angeordnet sein und erfasst vorzugsweise zumindest ein relativ zu dem Positionserfassungssystem bewegtes Objekt und/oder eine relativ zu dem Positionserfassungssystem bewegte Arbeitsumgebung. In einer typischen Anwendung befindet sich das Positionserfassungssystem und die Arbeitsumgebung in einem gemeinsamen System (also relativ ortsfest zueinander) mit einem dazu relativ bewegten Objektsystem.

Grundsätzlich kann das Verfahren auch genutzt werden, wenn sowohl das Objekt und als auch das Positionserkennungs- Prozesssteuerungssystem beide gegenüber einem raumfesten System mit verschiedenen Geschwindigkeiten und/oder in verschiedenen Bewegungsbahnen bewegt werden bzw. bewegbar sind.

Eine erfindungsgemäß besonders bevorzugte Auswertung der 3D-Punktewolken und der Bilder der Kameras (nachfolgend auch einfach als "Daten" bezeichnet) kann zum Erkennen der Flächen, zur Zuordnung der 3D-Arbeitszonen und/oder Verknüpfung von Position und Ausrichtung des Objekts aus 3D-Punktewolke und Marker des Objekts KI-Verfahren (Verfahren zur künstlichen Intelligenz) anwendet und auf 3D-Punktewolken zugreifen, die über die Zeit von dem mindestens einen Sensor aufgenommen werden. Dies kann insbesondere die während des Einlernens aufgenommenen Daten und die im laufenden Betrieb über die Zeit erfassten Daten beinhalten. Hierdurch wird eine ständige Aktualisierung des Positionserfassungssystems und der Prozesssteuersystem erreicht, die sich bspw. auch an geänderte Arbeitsabläufe anpasst. Es ist erfindungsgemäß auch möglich, dass zusätzlich zu den Objekten auch die Position der Werker beim Ausführen der Arbeitsaufgaben, bspw. im Rahmen einer Qualitätskontrolle und der Bewertung der Arbeitsabläufe, ausgewertet wird.

Die Erfindung betrifft auch eine Vorrichtung zur Prozesssteuerung von Arbeitsaufgaben mittels mindestens eines Werkzeugs an mindestens einem Objekt mit den Merkmalen des Anspruchs 10. Die Vorrichtung weist ein Positionserkennungssystem zur Ermittlung der Position und Ausrichtung des Werkzeugs umfassend mindestens einen an dem Werkzeug anbringbaren (bzw. angebrachten) Marker und eine Kamera, die zur Erfassung eines Bilds des Marker eingerichtet ist, und zur Ermittlung der Position und Ausrichtung des Objekts umfassend mindestens einen Sensor auf. Ferner ist ein Prozesssteuerungssystem zum Freigegeben, Parametrieren und/oder Erfassen des Ausführens der Arbeitsaufgabe für das Objekt vorgesehen. Eine Recheneinheit des Positionserfassungs- und Prozesssteuerungssystems ist zur Steuerung des Positionserfassungs- und Prozesssteuersystems (einschließlich deren Komponenten wie insbesondere Kameras und Sensoren) mit mindestens einem entsprechend eingerichteten Prozessor (bspw. einem gemeinsamen Prozessor für das Positionserfassungs- und Prozesssteuerungssystems) ausgestattet. Der mindestens eine Sensor ist dazu eingerichtet, eine Szene mit dem mindestens einen Objekt und dem mindestens einen Werkzeug als 3D-Punktewolke mit Bildpunkten zu erfassen, wobei jedem Bildpunkt eine Entfernungsinformation zugeordnet ist. Der mindestens eine Prozessor ist zur Durchführung des Verfahrens nach einem der Ansprüche 1 bis 9 oder Teilen davon eingerichtet.

Das Positionserfassungs- und Prozesssteuerungssystems wird als eine logische Einheit angesehen und beschrieben, unabhängig davon, ob diese real in einer physikalischen Recheneinheit realisiert sind oder in mehreren physikalischen Recheneinheiten, die als ein Kommunikationsverbund von Prozessoren Daten austauschen und einzelne Verfahrensschritte in der einen und/oder anderen Recheneinheit ausführen. Die Aufteilung bestimmter Verfahrensschritte auf verschiedene physikalische Recheneinheiten oder eine Realisierung des Positionserfassungs- und Prozesssteuerungssystems in einer Recheneinheit, mit jeweils einem oder mehreren Prozessoren, kann von dem Fachmann ohne weiteres realisiert werden.

Gemäß einer bevorzugten Ausführungsform ist der mindestens eine Sensor ein LIDAR-Sensor oder ein TOF-Sensor, wobei in einer erfindungsgemäßen Vorrichtung mit mehreren Sensoren auch ein Teil der Sensoren als LIDAR-Sensoren und ein anderer Teil der Sensoren als TOF-Sensoren ausgebildet sein kann.

Weitere Vorteile, Merkmale und Anwendungsmöglichkeiten der Erfindung ergeben sich auch aus der nachfolgenden Beschreibung von Ausführungsbeispielen und der Zeichnung. Dabei gehören alle beschriebenen und/oder bildlich dargestellten Merkmale zusammen oder in beliebiger fachmännisch sinnvoller Kombination zum Gegenstand der Erfindung, auch unabhängig von ihrer Zusammenfassung in beschriebenen bzw. dargestellten Ausführungsbeispielen oder in den Ansprüchen.

Es zeigen:
- Fig. 1: schematisch eine Ausführungsform der erfindungsgemäßen Vorrichtung; und
- Fig. 2: schematisch einen Ausschnitt der Vorrichtung nach Fig. 1 beim Einmessen des Objekts.

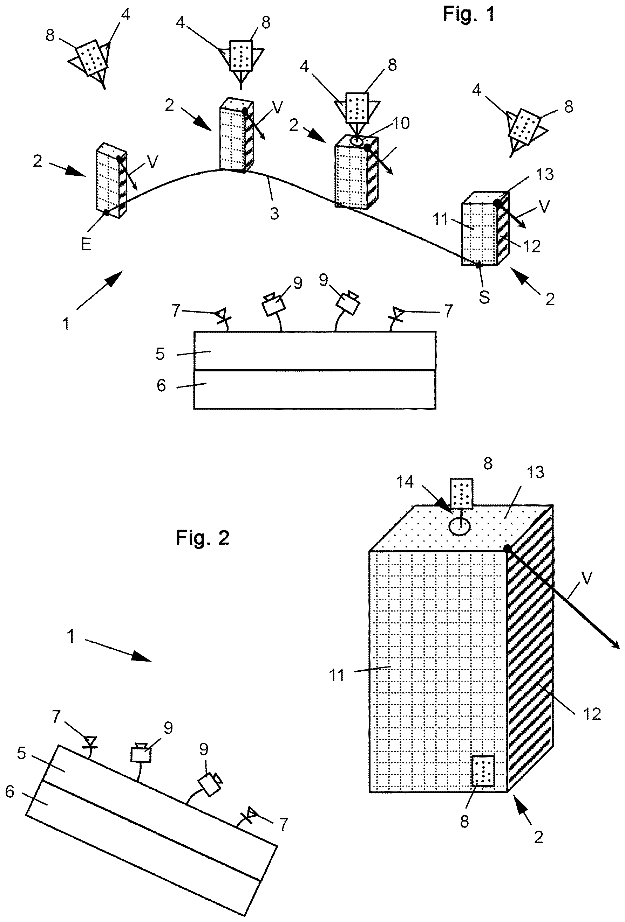

In Fig. 1 ist schematisch eine der Übersichtlichkeit halber vereinfacht dargestellte Ausführungsform einer erfindungsgemäßen Vorrichtung 1 zur Prozesssteuerung von Arbeitsaufgaben an einem auch als Werkstück bezeichneten Objekt 2 dargestellt. Während der Bearbeitung wird das Objekt 2 in dem hier dargestellten Beispiel von einem Startpunkt S bis zu einem Endpunkt E auf einer Bewegungsbahn 3 durch einen Bearbeitungsbereich bewegt. Die Bewegungsgeschwindigkeit ist variabel. Die Arbeitsaufgaben werden mittels eines Werkzeugs 4 durchgeführt, das bspw. von einem Werker geführt und betätigt wird.

Das Werkstück 2 kann während der Bewegung auch gestoppt werden. Dies wird von dem erfindungsgemäßen System erkannt, ohne dass eine neue Initialisierung der Prozesssteuerung notwendig wird. Dazu weist die den Bearbeitungsbereich erfassende Vorrichtung 1 ein Positionserkennungssystem 5 und ein insbesondere nachgeordnetes Prozesssteuerungssystem 6 auf, die hier als eine gemeinsame Recheneinheit mit zur Steuerung der Vorrichtung und Durchführung des erfindungsgemäßen Verfahrens eingerichteten Prozessoren dargestellt ist.

An das Positionserkennungssystem 5 sind in dem hier dargestellten Beispiel zwei Kameras 7 angeschlossen, die die gesamte Szene aus verschiedenen Blickrichtungen erfassen. In einer realen Anwendung sind typischerweise mehr Kameras 7 vorgesehen, die redundant Bilder der gesamten Szene aus verschiedenen Blickrichtungen aufnehmen. Aus den Bildern der Kameras 7 bestimmt das Positionserkennungssystem die Position und Ausrichtung des Werkzeugs 4 in einem übergeordneten Koordinatensystem über die Zeit, d.h. während der Bewegung des Werkstücks 2 entlang der Bewegungsbahn 3. Dazu erfasst mindestens eine der Kameras 7 das Bild der Werkzeuge 4, an den Marker 8 mit Markierungen angebracht sind. Das Positionserkennungssystem 5 ist, wie eingangs erläutert und dem Fachmann aus dem Stand der Technik bekannt, dazu eingerichtet, aus dem Bild der Kameras 7 die Position und Ausrichtung der Werkzeuge 4 anhand der Marker 8 zu bestimmen.

Weiter sind an das Positionserkennungssystem 5 Sensoren 9 angeschlossen, in dem hier dargestellten Beispiel zwei Sensoren 9, die die gesamte Szene aus verschiedenen Blickrichtungen erfassen. In einer realen Anwendung sind typischerweise mehr Sensoren vorgesehen, die redundant die gesamte Szene aus verschiedenen Blickrichtungen erfassen. Bei den Sensoren 9 handelt es sich um LIDAR-Sensoren oder TOF-Sensoren oder vergleichbare Sensoren 9, mit denen eine Szene mit dem Objekt 2 und dem mindestens einen Werkzeug 4 über die Zeit optisch erfasst und jedem Bildpunkt eine Entfernungsinformation als 3D-Punktewolke zugeordnet wird, wobei aus den Bildpunkten und der Entfernungsinformation das Objekt 2 erkannt und die Position und Ausrichtung des Objekts bestimmt werden.

Durch einen Vergleich (bspw. in dem Positionserkennungssystem 5 oder dem Prozesssteuerungssystem 6) wird über die Zeit festgestellt, wann sich das Werkzeug 4 in einer der 3D-Arbeitszonen 10 an dem Objekt 2 (für genau dieses Werkzeug 4) befindet. In diesem Fall wird eine Arbeitsposition des Werkzeugs 4 signalisiert. Mit Bezug auf Fig. 2 wird später noch beschrieben, wie die 3D-Arbeitsposition an dem Werkstück 2 in dem übergeordneten Koordinatensystem, in dem auch die Position und Ausrichtung der Werkzeuge beschrieben werden, festgelegt werden. Das übergeordnete Koordinatensystem des Positionserkennungssystems 5 wird genutzt, um die Werkzeuge 4 sowie Menschen, Körperteile von Menschen (z.B. Hände, Arme, Kopf) oder sonstige Teile, an denen Marker 8 festgelegt sind, präzise in Position und Lage zu lokalisieren. Das Positionserkennungssystem 5 ist in der Lage, sehr präzise Bewegungen von einem oder mehreren Werkzeugen 4 (respektive der Marker 8) im Raum in sechs Freiheitsgraden (Position und Ausrichtung) zu erkennen.

Bei einer signalisierten Arbeitsposition des Werkzeugs 4 wird mittels des Prozesssteuerungssystems 6 das Ausführen der Arbeitsaufgabe für das Objekt 2 in der 3D-Arbeitszone 10 freigegeben, parametriert und/oder erfasst. Der Werker kann die Arbeitsaufgabe an dem Werkstück 2 in dieser 3D-Arbeitszone 10 mit den Werkzeug 4 dann ausführen, wobei ggf. auch Parameter des Werkzeugs gesetzt werden oder die Ausführung des Arbeitsschritts zur Qualitätssicherung erfasst wird. Dies ist beispielhaft Gegenstand der Prozesssteuerung.

In einem konkreten Beispiel können die Werkzeuge 4 Schrauber oder Bohrmaschinen sein. Die Arbeiten am Werkstück 2 (Objekt) sollen in den definierten 3D-Arbeitszonen 10 am Werkstück 2 durchgeführt werden. Die 3D-Arbeitszonen 10 können sehr klein sein; bspw. sollen Kugelzonen mit z.B. einem Radius von 1 cm überwacht werden. Eine eindeutige Erkennung kleinster Raumzonen ist im gesamten Verlauf der Bewegungsbahn des Werkstücks 2 möglich, auch wenn der gesamte Bearbeitungsbereich mehrere Meter lang sein kann. In der Automobilindustrie sind dies oftmals 7 m, in denen das Werkstück 2 (Fahrzeug) bearbeitet wird.

Schrauben sind oftmals an nicht sichtbaren Positionen am Werkstück 2 angebracht und nur durch Verlängerungen des Schrauberbits (Teil des Werkzeugs 4) erreichbar, da diese vertieft in einem Loch liegen. Ein oder mehrere handgeführte Schrauber (Werkzeug 4) werden durch das Positionserkennungssystem 5 eindeutig in Position und Lage im Raum erkannt. Das Positionserkennungssystem 5 berechnet z.B. die Position des Schrauberbits im Raum über einen Vektor zur Schrauberspitze (Teil des Werkzeugs 4) und signalisiert dem Prozesssteuerungssystem 6 die Informationen zurück, ob die Position des Schrauberbits eines Schraubers (Werkzeug 4) eine 3D -Arbeitszone 10 am Werkstück 2 erreicht. Die Prozesssteuerung kann diese Information nutzen, um den Schrauber (Werkzeug 4) individuell für den folgenden Schraubvorgang in der Zone zu parametrieren und den Schraubvorgang in dieser Position zu erlauben. Der vorher gesperrte Schrauber wird nun freigegeben, und der Werker kann gezielt diese Position verschrauben.

Das Werkstück 2 und ein (nicht dargestellter) Träger des Werkstücks 2 sind bei der Ausführung des Verfahrens nicht mit Markern 8 ausgerüstet. Dies ist vorteilhaft, weil der Vorgang der Nachrüstung von Markern 4 an jedem der Werkstücke kosten- und arbeitsintensiv ist. Marker 4 müssen präzise hergestellt werden und klassifizierbar sein. Ferner müssen an dem Werkstück respektive Objekt 2 präzise Befestigungspunkte gefunden und mittels Kalibriervorgängen am Objekt 2 angebracht werden oder bei jedem einfahrenden Werkstück durch einen Werker positionsgenau eingesetzt werden. Auch die 3D-Konstruktionsdaten des Werkstücks 2 sind nicht erforderlich und entsprechend in typischen Anwendungen zumindest dem Positionserkennungssystem 6 und dem Prozesssteuerungssystem 6 nicht bekannt.

Durch das vorgeschlagene System (Vorrichtung und Verfahren) können zu jedem Zeitpunkt der Bahnverläufe des Objekts 2 also 3D-Arbeitszonen 10 an einem oder mehreren Objekten 10 (Werkstücken) genau lokalisiert werden. Bei den 3D-Arbeitszonen 10 kann es sich z.B. um Montagezonen zum Schrauben, Bohren, Reiben, Rollen, Kleben, Fetten, Einklicken, Eindrücken handeln, die sich nicht synchron mit den Werkzeugen 4 bewegen. Ein und mehrere Werkzeuge 4 in unterschiedlichen Positionen als in auch Bewegungen von einem oder mehreren Werkern werden eindeutig erkannt und einander zugeordnet.

Fig. 2 zeigt einen Ausschnitt der Vorrichtung 1 gemäß Fig. 1 mit dem Positionserkennungssystem 5 mit den Kameras 7 und den Sensoren 9 und mit dem Prozesssteuerungssystem 6.

Ein (noch unbekanntes) Objekt 2 ist in dem Erfassungsbereich des Positionserkennungssystems 5 angeordnet und soll durch Einmessen (Einteachen) in das System eingelernt werden. Dazu wird das Objekt 2 mittels des Sensors 9 des Positionserkennungssystem 5 als 3D-Punktewolken erfasst. Falls mehrere Sensoren 9 das Objekt 2 erfassen, können die mehreren 3D-Punktwolken aufeinander registriert werden, so dass eine gemeinsame 3D-Punktwolkte (im Sinne eines gemeinsamen 3D-Raumes) entsteht.

In einem (bspw. manuel oder mittels einer Bildererkennungssoftware automatisch) erkannten Bildbereich, der das Objekt 2 zeigt, werden mehrere (ebene oder gekrümmte) Flächen 11, 12, 13 erkannt (in der Zeichnung mit unterschiedlicher Textur dargestellt) und als Flächen 11, 12, 13 des Objekts identifiziert. Die als Flächen 11, 12, 13 des Objekts 2 identifizierten Flächen 11, 12, 13 werden in Relation zueinander gesetzt, um das Objekt 2 zu beschreiben. Das Beschreiben des Objekts 2 kann z.B. als ein Positions- und Ausrichtungsvektor V des Objekts 2 dargestellt werden, der aus der Relation der identifizierbaren Flächen 11, 12, 13 abgeleitet wird.

Konkret können in dem dargestellten Beispiel folgende Schritte ausgeführt werden. Gefilterte 3D-Datenkanäle aus der 3D-Punktewolke, die Flächen 11, 12, 13 im Raum bilden bzw. beschreiben, werden die Kanten umgerechnet. Die Kanten werden durch Geraden mit Start und Stoppunken im 3D-Raum beschrieben und zueinander ins Verhältnis gesetzt. Eine Summe der Orientierung der errechneten Flächen 11, 12, 13 im Raum erzeugen einen charakteristischen Wert, der als Positions- und Ausrichtungsvektor V des Objekts 2 im Raum dargestellt werden kann und der an einer bestimmten (vorzugsweise durch das Programm zur Auswertung bestimmten) Position des Objekts 2 angreift, etwa dem Schnittpunkt bestimmter der identifizierten Flächen 11, 12, 13. Es sind auch andere Methoden zur Bestimmung eines charakteristischen Werts möglich, wie eingangs beschrieben.

Die Veränderung des charakteristischen Werts (bspw. des Vektors V) kann erfindungsgemäß bei allen beschriebenen Ausführungen der Erfindung genutzt werden, um eine Bewegungsgeschwindigkeit und Bewegungsrichtung des Objekts 2 zu bestimmen. Ein linearer Zuwachswert kann definiert werden für den Fall, dass bei einem Signalverlust eine Interpolation der Bewegung entlang des erfassten Datensignals angenommen wird, was auch erfindungsgemäß bei allen beschriebenen Ausführungen der Erfindung genutzt werden kann.

Zusätzlich wird an dem Objekt 2 mindestens ein Marker 8 des Positionserkennungssystems 5 angebracht. Ein oder mehrere Marker 8 definieren hierbei ein Koordinatensystem auf dem Objekt 2 (Werkstück), das dem übergeordneten Koordinatensystem entspricht.

Ferner wird das Werkzeug 4 mit dem Marker 8 und/oder - wie in dem Ausführungsbeispiel der Fig. 2 gezeigt - ein Positionstracker 14 mit einem Marker 8 an einen Arbeitspunkt des Objekts 2 für eine Arbeitsaufgabe geführt. Zeitsynchron werden dann die 3D-Punktewolke durch den Sensor 2 und ein Bild der Marker 8 des Objekts 2 und des Werkzeugs 4 und/oder Positionstrackers 14 durch die Kamera 7 erfasst, wobei die Position und Ausrichtung des Objekts 2 (bspw. beschrieben durch den Positions- und Ausrichtungsvektor V) und die Position und Ausrichtung des Markers des Werkzeugs 4 und/oder Positionstrackers 14 über die Position und Ausrichtung des Markers 8 an dem Objekt 2 miteinander korreliert werden zur Definition der einen oder mehreren 3D-Arbeitszonen 10 des Objekts 2. Damit wird die Position der 3D-Arbeitszonen 10 des Objekts 2 in dem übergeordneten Koordinatensystem bekannt, ohne dass der Positions- und Ausrichtungsvektor V des Objekts 2 (oder allgemeiner dessen Positions- und Ausrichtung) quantitativ in dem übergeordneten Koordinatensystem bekannt sein muss.

Bei Anwendung des Einlernens in der beschriebenen Weise muss jede Produktvariante einmal eingelernt werden. Ferner ist es vorteilhaft, ein Werkstück 2 bei dem Einmessen durch den Bearbeitungsbereich entlang der Bewegungsbahn 3 zu fahren, um das Identifizieren des Werkstücks 2 bei der Anwendung des Verfahrens zur Prozesssteuerung zu erleichtern und beschleunigen. Die Geschwindigkeit der Bewegung ist hierbei nicht relevant. Ein Aufnahmeprozess kann z.B. auch gestoppt oder unterbrochen werden. Es können auch mehrere Werkstücke 2 parallel im Bearbeitungsbereich verfahren werden. Die Daten der einzelnen Werkstücke 2 können extrahiert und zum Anlernen (bspw. unter Anwendung von KI-Methoden) genutzt werden, um durch redundante Erfassung robustere Ergebnisse zu erzielen. Auf diese Weise können zusätzlich oder alternativ auch mehrere Produktvarianten gleichzeitig eingelernt werden.

Die hier bespielhaft beschriebene Vorrichtung 1 kann zur Durchführung aller in der Anmeldung beschriebenen Verfahrensschritte eingerichtet sein und ergänzend weitere Komponenten aufweisen, die in der Zeichnung der Übersichtlichkeit halber nicht dargestellt sind.

### Bezugszeichenliste

- 1: Vorrichtung zur Prozesssteuerung von Arbeitsaufgaben an einem Objekt
- 2: Objekt (Werkstück)
- 3: Bewegungsbahn
- 4: Werkzeug
- 5: Positionserkennungssystem
- 6: Prozesssteuerungssystem
- 7: Kamera
- 8: Marker mit Markierungen
- 9: Sensor
- 10: 3D-Arbeitszone
- 11: Fläche des Objekts
- 12: Fläche des Objekts
- 13: Fläche des Objekts
- 14: Positionstracker

- S: Startpunkt des Objekts auf der Bewegungsbahn
- E: Endpunkt des Objekts auf der Bewegungsbahn
- V: Positions- und Ausrichtungsvektor des Objekts

## Patentansprüche

1. Verfahren zur Prozesssteuerung von Arbeitsaufgaben mittels mindestens eines Werkzeugs (4) an mindestens einem Objekt (2), wobei die Arbeitsaufgaben in an dem Objekt (2) definierten 3D-Arbeitszonen (10) auszuführen sind, bei dem
mittels eines Positionserkennungssystems (5) die Position und Ausrichtung des Werkzeugs (4) in einem übergeordneten Koordinatensystem des Positionserkennungssystems (5) optisch über die Zeit bestimmt werden, wozu mindestens ein an dem Werkzeug angebrachter Marker (8) des Positionserkennungssystems (5) mittels einer Kamera (7) durch ein Bild erfasst wird;
mittels des Positionserkennungssystems (5) die Position und Ausrichtung des Objekts (3) optisch über die Zeit bestimmt wird;
aus der bestimmten Position und Ausrichtung des Objekts (2) jeweils die definierten 3D-Arbeitszonen (10) an dem Objekt (2) in dem übergeordneten Koordinatensystem ermittelt werden;
durch Vergleich über die Zeit festgestellt wird, wann sich das Werkzeug (4) in einer der 3D-Arbeitszonen (10) an dem Objekt (2) befindet, wobei in diesem Fall eine Arbeitsposition des Werkzeugs (4) signalisiert wird; und
bei einer signalisierten Arbeitsposition des Werkzeugs (4) mittels eines Prozesssteuerungssystems (6) das Ausführen der Arbeitsaufgabe für das Objekt (2) in der 3D-Arbeitszone (10) freigegeben, parametriert und/oder erfasst wird;
**dadurch gekennzeichnet, dass**
in dem Positionserkennungssystem (5) zur Bestimmung von Position und Ausrichtung des Objekts (2) mindestens ein Sensor (9), insbesondere ein LIDAR-Sensor oder ein TOF-Sensor, vorgesehen ist, mit dem eine Szene mit dem mindestens einen Objekt (2) und dem mindestens einen Werkzeug (4) über die Zeit optisch erfasst und jedem Bildpunkt eine Entfernungsinformation als 3D-Punktewolke zugeordnet wird, wobei aus den Bildpunkten und der Entfernungsinformation das Objekt (2) erkannt und die Position und Ausrichtung des Objekts (2) bestimmt werden.

2. Verfahren nach Anspruch 1, **dadurch gekennzeichnet, dass** in der 3D-Punktewolke mehrere Flächen (11, 12, 13) erkannt und zueinander in Relation gesetzt werden, um das Objekt (2) zu erkennen und die Position und Ausrichtung des Objekts (2) über die Zeit zu bestimmen.

3. Verfahren nach Anspruch 2, **dadurch gekennzeichnet, dass** Ränder der Flächen (11, 12, 13) des Objekts (2) durch Kanten erkannt werden, an denen sich die Orientierung der Fläche (11, 12, 13) ändert, und/oder durch Helligkeitsänderungen in dem Bild.

4. Verfahren nach Anspruch 2 oder 3, **dadurch gekennzeichnet, dass** aus Änderung von Position und/oder Ausrichtung des Objekts (2) über die Zeit eine Bewegung des Objekts (2) relativ zu dem Positionserfassungssystem (5) bestimmt wird.

5. Verfahren nach einem der vorhergehenden Ansprüche, **dadurch gekennzeichnet, dass** die Bestimmung der an dem Objekt (2) definierten 3D-Arbeitszonen (10) durch Einmessen des Objekts (2) erfolgt, bei dem
das Objekt (2) mittels des mindestens einen Sensors (9) des Positionserkennungssystem (5) 3D-Punktewolken erfasst, mehrere Flächen (11, 12, 13) erkannt und als Flächen (11, 12, 13) des Objekts (2) identifiziert werden;
die als Flächen (11, 12, 13) des Objekts (2) identifizierten Flächen (11, 12, 13) in Relation zueinander gesetzt werden, um das Objekt (2) zu beschreiben;
an dem Objekt (2) mindestens ein Marker (8) des Positionserkennungssystems (5) angebracht wird, und
das Werkzeug (4) mit dem Marker (8) und/oder ein Positionstracker (14) mit einem Marker (8) an einen Arbeitspunkt für eine Arbeitsaufgabe geführt wird sowie zeitsynchron die 3D-Punktewolke und ein Bild der Marker (8) des Objekts (2) und des Werkzeugs (4) und/oder Positionstrackers (14) erfasst werden, wobei die Position und Ausrichtung des Objekts (2) und die Position und Ausrichtung des Markers (8) des Werkzeugs (4) und/oder Positionstrackers (14) über die Position und Ausrichtung des Markers (8) des Objekts (2) miteinander korreliert werden zur Definition der 3D-Arbeitszonen (10) des Objekts (2).

6. Verfahren nach Anspruch 5, **dadurch gekennzeichnet, dass** das Objekt (2) bei dem Einmessen von einem Startpunkt (S) bis zu einem Endpunkt (E) eines Bearbeitungsbereichs des Objekts (2) bewegt und über den Bearbeitungsbereich mit dem Sensor (9) erfasst und jeweils die Position und Ausrichtung bestimmt wird.

7. Verfahren nach einem der vorhergehenden Ansprüche, **dadurch gekennzeichnet, dass** die Szene mit dem mindestens einen Objekt (2) und dem mindestens einen Werkzeug (4) von mehreren Sensoren (9) aus verschiedenen Richtung aufgenommen wird.

8. Verfahren nach einem der vorhergehenden Ansprüche, **dadurch gekennzeichnet, dass** sich bei der Prozesssteuerung gleichzeitig mehrere Objekte (2) und/oder Werkzeuge (4) im Bearbeitungsbereich befinden und mehrere Arbeitsaufgaben unabhängig voneinander parallel ausgeführt werden.

9. Verfahren nach einem der vorhergehenden Ansprüche, **dadurch gekennzeichnet, dass** die Auswertung der 3D-Punktewolken und der Bilder der Kameras (7) zum Erkennen der Flächen (11, 12, 13), zur Zuordnung der 3D-Arbeitszonen (1) und/oder Verknüpfung von Position und Ausrichtung des Objekts (2) aus 3D-Punktewolke und Marker des Objekts (2) KI-Verfahren anwendet und auf 3D-Punktewolken zugreift, die über die Zeit von dem mindestens einen Sensor (9) aufgenommen werden.

10. Vorrichtung zur Prozesssteuerung von Arbeitsaufgaben mittels mindestens eines Werkzeugs (4) an mindestens einem Objekt (2) mit
einem Positionserkennungssystem (5) zur Ermittlung der Position und Ausrichtung des Werkzeugs (4) umfassend mindestens einen an dem Werkzeug (4) anbringbaren Marker (8) und eine Kamera (7), die zur Erfassung eines Bilds des Marker eingerichtet ist, und zur Ermittlung der Position und Ausrichtung des Objekts (2) umfassend mindestens einen Sensor (9);
einem Prozesssteuerungssystem (6) zum Freigegeben, Parametrieren und/oder Erfassen des Ausführens der Arbeitsaufgabe für das Objekt (2);
einer Recheneinheit des Positionserfassungs- und Prozesssteuerungssystems (5, 6), die zur Steuerung des Positionserfassungs- und Prozesssteuersystems (5, 6) mit mindestens einem Prozessor;
**dadurch gekennzeichnet, dass**
der mindestens eine Sensor (9) dazu eingerichtet ist, eine Szene mit dem mindestens einen Objekt (2) und dem mindestens einen Werkzeug (4) als 3D-Punktewolke mit Bildpunkten zu erfassen, wobei jedem Bildpunkt eine Entfernungsinformation zugeordnet ist, und
der mindestens eine Prozessor zur Durchführung des Verfahrens nach einem der Ansprüche 1 bis 9 eingerichtet ist.

11. Vorrichtung nach Anspruch 10, **dadurch gekennzeichnet, dass** der mindestens eine Sensor (9) ein LIDAR-Sensor oder ein TOF-Sensor ist.
